# EUROPEAN PATENT APPLICATION

(11) **EP 4 768 378 A1**
(43) Date of publication of application: **01.07.2026**
(21) Application number: 25225613.6
(22) Date of filing: 19.12.2025
(51) Int. Cl.: B62K 23/04

(54) **THROTTLE GRIP DEVICE WITH REVERSE FUNCTION AND OPERATION LOAD AT START**

(30) Priority: 26.12.2024 JP 2024230977
(71) Applicant: Asahi Denso Co., Ltd., Shizuoka 434-0046 (JP)
(72) Inventor: Ishibashi, Ryuki, Hamamatsu City, Shizuoka, 434-0046 (JP)
(74) Representative: Grünecker Patent- und Rechtsanwälte PartG mbB

(57) **Abstract**

A throttle grip device has a throttle grip operated with a forward rotation and a reverse rotation from an initial position, an interlocking member including an engaged portion and rotating in conjunction with the rotation of the throttle grip, a first biasing unit biasing the interlocking member toward the initial position during the forward rotation of the throttle grip, a second biasing unit biasing the interlocking member toward the initial position during the reverse rotation of the throttle grip, and a biasing unit applying a biasing force to an engaging portion formed on the throttle grip until the engaging portion abuts against the engaged portion to rotate the interlocking member in a forward direction when the throttle grip is operated with the forward rotation from the initial position. The second biasing unit and the biasing unit are attached to one surface and the other surface of the interlocking member, respectively.

## Description

### TECHNICAL FIELD

The present invention relates to a throttle grip device in which a drive source of a vehicle is controlled based on a rotation operation of a throttle grip.

### BACKGROUND ART

In recent two-wheel vehicles, a throttle grip device configured to detect a rotation angle of a throttle grip by a sensor and send the detected value as an electric signal to an electronic control unit or the like mounted on the two-wheel vehicle has been widely used. As a throttle grip device in the related art, for example, a throttle grip device disclosed in JP2018-090065A is exemplified. In such a throttle grip device in the related art, when a throttle grip rotates from an initial position, since no operation load is generated until an engaging portion abuts against an engaged portion, an operational feeling is significantly different from that of a general-purpose wire type throttle grip whose operability is familiar, and there is a possibility that the operability is deteriorated.

In order to resolve such a problem of the operability, for example, as disclosed in JP2024-085860A, the present applicant has proposed a throttle grip device including an initial position biasing unit for applying a biasing force to an engaging portion until the engaging portion abuts against an engaged portion when a throttle grip rotates from an initial position. According to such a throttle grip device, an operation load can be generated at a start of a rotation operation of the throttle grip and before rotation of an interlocking member.

However, although the throttle grip device in the related art including the initial position biasing unit can improve the operability of the throttle grip by generating the operation load at the start of the rotation operation of the throttle grip and before the rotation of the interlocking member, it is difficult to apply the throttle grip device in the related art to a throttle grip device capable of activating or deactivating a predetermined function of a vehicle by operating the throttle grip with a rotation in a reverse direction (reverse rotation).

That is, when the throttle grip device in the related art is applied to a throttle grip device including a throttle grip capable of forward rotation in a predetermined direction and reverse rotation in a direction opposite to the predetermined direction from an initial position, it is necessary to separately dispose an initial position biasing unit in addition to a biasing unit used during the forward rotation and a biasing unit used during the reverse rotation of the throttle grip, and it is difficult to secure a space for disposing the initial position biasing unit.

### SUMMARY OF INVENTION

An object of the present invention is to provide a throttle grip device capable of generating an operation load at a start of a rotation operation of a throttle grip and before rotation of an interlocking member, and capable of operating the throttle grip with rotations in a forward direction and a reverse direction while generating biasing forces.
(1) A throttle grip device having:
   a throttle grip configured to be operated with a rotation by a driver, and allowed to be operated with a forward rotation in a predetermined direction and a reverse rotation in a direction opposite to the predetermined direction from an initial position;
   an interlocking member including an engaged portion configured to be engaged with an engaging portion formed on the throttle grip, and configured to rotate in conjunction with the forward rotation and the reverse rotation of the throttle grip;
   a case configured to rotatably hold the interlocking member;
   a first biasing unit configured to bias the interlocking member toward the initial position when the throttle grip is operated with the forward rotation;
   a second biasing unit configured to bias the interlocking member toward the initial position when the throttle grip is operated with the reverse rotation; and
   a rotation angle detection unit configured to detect a rotation angle of the throttle grip by detecting a rotation angle of the interlocking member, in which
   a drive source of a vehicle is allowed to be controlled in accordance with the rotation angle, detected by the rotation angle detection unit, of the throttle grip during the forward rotation,
   a predetermined function of the vehicle is allowed to be activated or deactivated when the throttle grip is operated with the reverse rotation,
   the throttle grip device further has an initial position biasing unit configured to apply a biasing force to the engaging portion until the engaging portion abuts against the engaged portion to cause the interlocking member to perform a forward rotation when the throttle grip is operated with the forward rotation from the initial position, and
   the second biasing unit and the initial position biasing unit are attached to one surface and an other surface of the interlocking member, respectively.
(2) The throttle grip device according to (1), in which
   the initial position biasing unit includes:
      an abutting member that abuts against the engaging portion; and
      a biasing member that is attached to the abutting member and biases the engaging portion, and
   the interlocking member has an accommodation recess portion that accommodates the abutting member and the biasing member.
(3) The throttle grip device according to (2), in which
   the engaged portion has:
      a one end wall portion formed at one end portion of the accommodation recess portion; and
      a convex portion protruding from the interlocking member,
   the engaging portion abuts against the one end wall portion to rotate the interlocking member during the forward rotation of the throttle grip,
   the engaging portion abuts against the convex portion to rotate the interlocking member during the reverse rotation of the throttle grip, and
   the one end wall portion has an insertion portion through which the abutting member is inserted to cause a tip end portion of the abutting member to abut against the engaging portion.
(4) The throttle grip device according to (3), in which
   the biasing member is a coil spring that has one end abutting against the abutting member and is accommodated in the accommodation recess portion, and
   the accommodation recess portion is formed in an arc shape along a virtual circle centered on a rotation axis of the interlocking member.
(5) The throttle grip device according to (4), in which
   the initial position biasing unit includes a cover member that covers an opening of the accommodation recess portion to close an accommodation space for the abutting member and the biasing member, and
   the cover member has a receiving portion that receives an other end of the biasing member.
(6) The throttle grip device according to (5), in which
   any cover member having the receiving portion formed at a different position each other is allowed to be attached to the accommodation recess portion.
(7) The throttle grip device according to (2), in which
   the biasing member of the initial position biasing unit is a multiple-stage pitch spring which has a plurality of regions having different pitches and in which a spring characteristic changes in a plurality of stages in a compression process.
(8) The throttle grip device according to (2), in which
   the first biasing unit is a torsion coil spring,
   the second biasing unit and the biasing member of the initial position biasing unit are coil springs, and
   in a case where a virtual circle along a coil portion of the torsion coil spring of the first biasing unit is defined as a first virtual circle, and virtual circles obtained by offsetting the first virtual circle in a direction of a rotation axis of the interlocking member are defined as a second virtual circle and a third virtual circle, the second biasing unit and the biasing member of the initial position biasing unit are disposed in an arc shape along the second virtual circle and the third virtual circle, respectively.

According to the above-described (1), since the initial position biasing unit is provided, and the second biasing unit and the initial position biasing unit are respectively attached to the one surface and the other surface of the interlocking member, it is possible to generate an operation load at a start of the rotation operation of the throttle grip and before the rotation of the interlocking member, and it is possible to operate the throttle grip with rotations in a forward direction and a reverse direction while generating biasing forces.

According to the above-described (2), since the initial position biasing unit has the abutting member that abuts against the engaging portion and the biasing member that is attached to the abutting member and biases the engaging portion, and the interlocking member has the accommodation recess portion that accommodates the abutting member and the biasing member, it is possible to reliably attach the initial position biasing unit to the other surface of the interlocking member.

According to the above-described (3), since the engaged portion has the one end wall portion formed at the one end portion of the accommodation recess portion and the convex portion protruding from the interlocking member, and the one end wall portion has the insertion portion through which the abutting member is inserted to cause the tip end portion of the abutting member to abut against the engaging portion, it is possible to generate the biasing force of the biasing member via the abutting member until (play section) the throttle grip is operated with the forward rotation from the initial position to cause the interlocking member to perform the forward rotation.

By further operating the throttle grip with the forward rotation from the play section, the engaging portion can press the one end wall portion to cause the interlocking member to perform the forward rotation, and by operating the throttle grip with the reverse rotation from the initial position, the engaging portion can press the convex portion to cause the interlocking member to perform the reverse rotation.

According to the above-described (4), since the biasing member is the coil spring that has one end abutting against the abutting member and is accommodated in the accommodation recess portion, and the accommodation recess portion is formed in an arc shape along the virtual circle centered on the rotation axis of the interlocking member, it is possible to satisfactorily transmit the biasing force of the biasing member to the engaging portion until the throttle grip is operated with the forward rotation to cause the interlocking member to perform the forward rotation.

According to the above-described (5), since the initial position biasing unit includes the cover member that covers the opening of the accommodation recess portion and closes the accommodation space for the abutting member and the biasing member, and the cover member has the receiving portion that receives the other end of the biasing member, the cover member can have both a function of closing the accommodation space of the accommodation recess portion and a function of receiving the other end of the biasing member.

According to the above-described (6), since any cover member having the receiving portion formed at a different position each other is allowed to be attached to the accommodation recess portion, it is possible to optionally attach a biasing member having a different length dimension to the accommodation recess portion.

According to the above-described (7), since the biasing member of the initial position biasing unit is the multiple-stage pitch spring which has a plurality of regions having different pitches and in which the spring characteristic changes in the plurality of stages in the compression process, it is possible to easily make an operational feeling similar to an operational feeling of a general-purpose wire type throttle grip whose operability is familiar.

According to the above-described (8), when the virtual circle along the coil portion of the torsion coil spring of the first biasing unit is defined as the first virtual circle, and the virtual circles obtained by offsetting the first virtual circle in the direction of the rotation axis of the interlocking member are defined as the second virtual circle and the third virtual circle, respectively, the second biasing unit and the biasing member of the initial position biasing unit are disposed in an arc shape along the second virtual circle and the third virtual circle, respectively, and thus it is possible to stably generate biasing forces of the first biasing unit, the second biasing unit, and the biasing member of the initial position biasing unit.

### BRIEF DESCRIPTION OF DRAWINGS

FIG. 1 is an overall perspective view showing a throttle grip device according to an embodiment of the present invention.
FIG. 2 is a three-sided view showing the throttle grip device.
FIG. 3 is a cross-sectional view taken along a line III-III in FIG. 2.
FIG. 4 is a cross-sectional view taken along a line IV-IV in FIG. 2.
FIG. 5 is an exploded perspective view showing the throttle grip device.
FIG. 6 is an exploded perspective view showing a main part of the throttle grip device.
FIG. 7 is an exploded perspective view showing a main part of the throttle grip device.
FIG. 8 is a schematic view showing a relative positional relationship among a first biasing unit, a second biasing unit, and a biasing member of an initial position biasing unit of the throttle grip device.
FIG. 9 is a three-sided view showing a case of the throttle grip device.
FIG. 10 is a perspective view showing an interlocking member of the throttle grip device.
FIG. 11 is a three-sided view showing the interlocking member of the throttle grip device.
FIG. 12 is a perspective view showing a state in which main components, such as the interlocking member, are accommodated in the case of the throttle grip device.
FIG. 13 is a cross-sectional view taken along a line XIII-XIII in FIG. 12.
FIG. 14 is a perspective view showing the initial position biasing unit and a cover member in the throttle grip device.
FIG. 15 is a perspective view showing an abutting member and the biasing member of the initial position biasing unit in the throttle grip device.
FIG. 16 is a perspective view showing the cover member attached to the initial position biasing unit in the throttle grip device.
FIG. 17 is a perspective view showing a state in which the cover member is removed from the main components of the throttle grip device.
FIG. 18 is a schematic view showing a state of the interlocking member and the initial position biasing unit when a throttle grip of the throttle grip device is at an initial position A0.

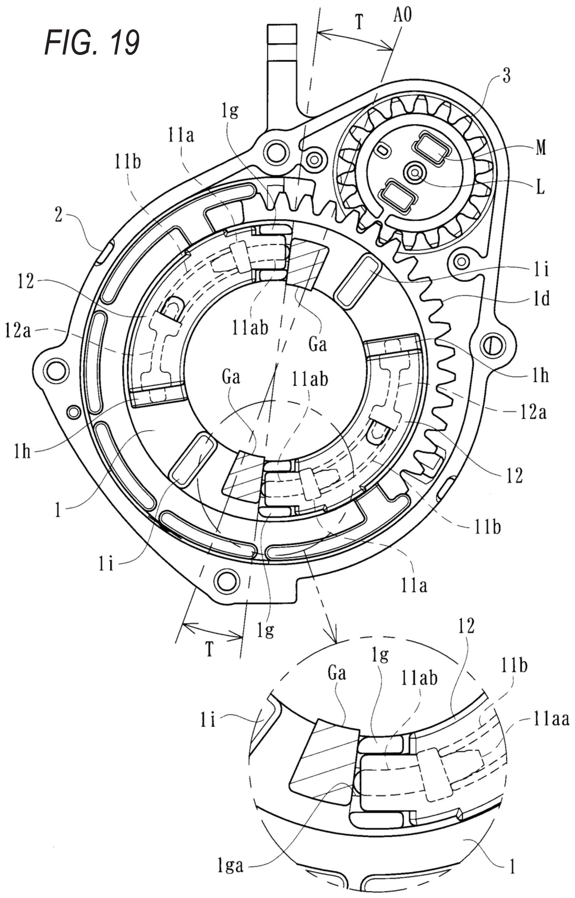

FIG. 19 is a schematic view showing a state of the interlocking member and the initial position biasing unit when the throttle grip of the throttle grip device is operated with a forward rotation from the initial position A0 to a play section T.
FIG. 20 is a schematic view showing the state of the interlocking member and the initial position biasing unit when the throttle grip of the throttle grip device is operated with the forward rotation from the initial position A0 and is further rotated from the play section T.
FIG. 21 is a schematic view showing the state of the interlocking member and the initial position biasing unit when the throttle grip of the throttle grip device is operated with a reverse rotation from the initial position A0.
FIG. 22 is a perspective view showing an initial position biasing unit for replacement and a cover member for replacement in the throttle grip device.
FIG. 23 is a perspective view showing an abutting member and a biasing member of the initial position biasing unit for replacement in the throttle grip device.
FIG. 24 is a perspective view showing the cover member for replacement attached to the initial position biasing unit for replacement in the throttle grip device.
FIG. 25 is a cross-sectional view taken along the line IV-IV in FIG. 2 when the initial position biasing unit for replacement and the cover member for replacement are attached to the interlocking member of the throttle grip device.
FIG. 26 is a graph showing a torque characteristic when the throttle grip of the throttle grip device is operated with a rotation.

### DESCRIPTION OF EMBODIMENTS

Hereinafter, embodiments of the present invention will be specifically described with reference to the drawings.

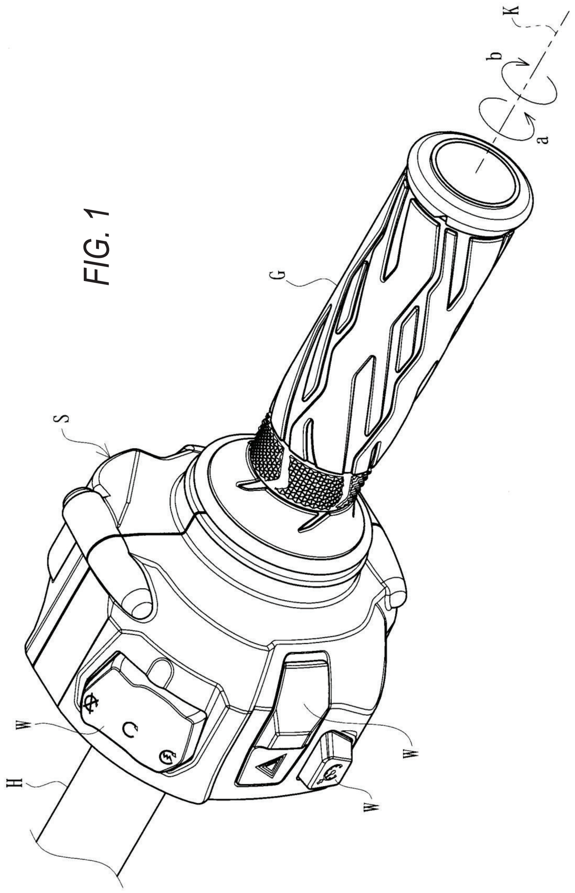

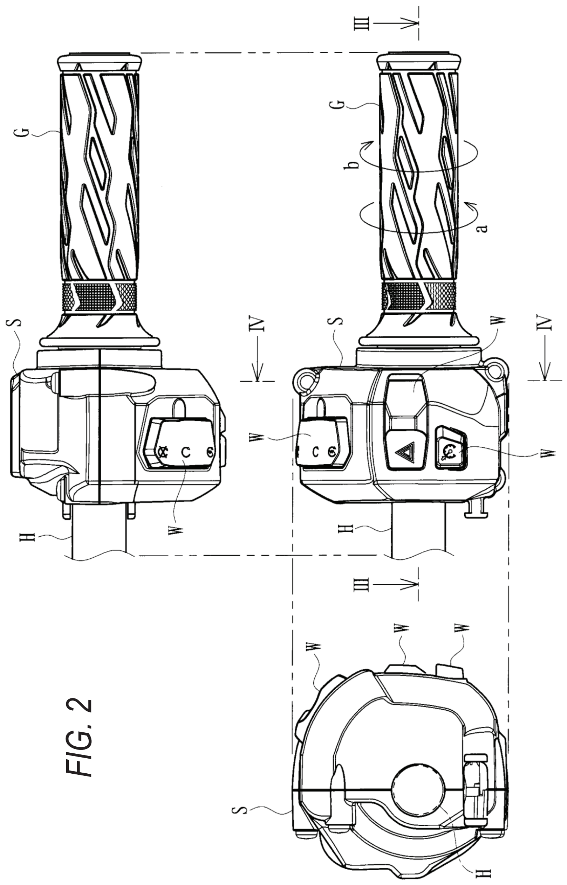

A throttle grip device according to the present embodiment detects a rotation angle of a throttle grip G attached to a handlebar H of a two-wheel vehicle (vehicle), and transmits a detection signal to an electronic control unit such as an ECU mounted on the two-wheel vehicle to control a drive source (an engine, a motor, or the like). Specifically, as shown in FIGS. 1 to 7, the throttle grip device according to the present embodiment includes a switch case S, the throttle grip G, an interlocking member 1, a case 2, a rotation member 3, a resistance force applying unit 4, a magnetic sensor 6 (rotation angle detection unit), a first biasing unit S1, second biasing units S2, and initial position biasing units 11. Various switches W for operating electrical components of the vehicle are attached to the switch case S.

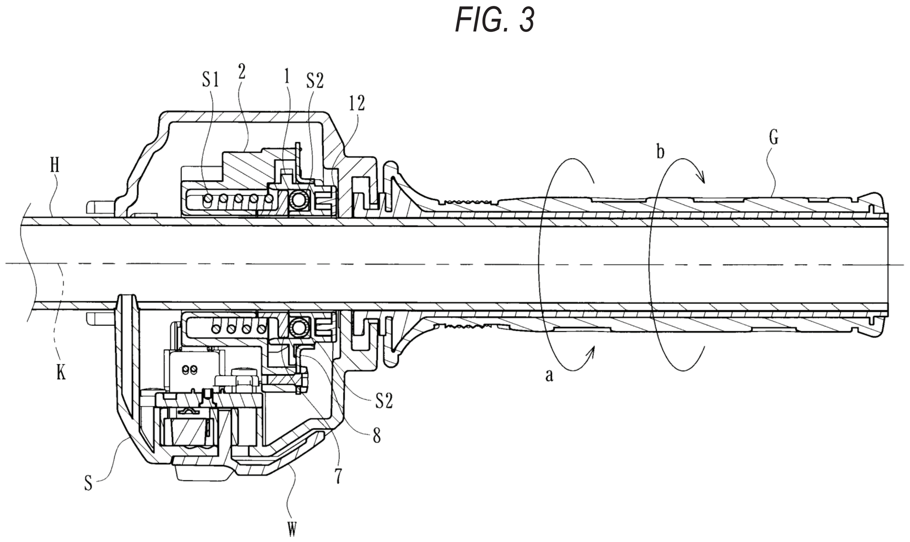

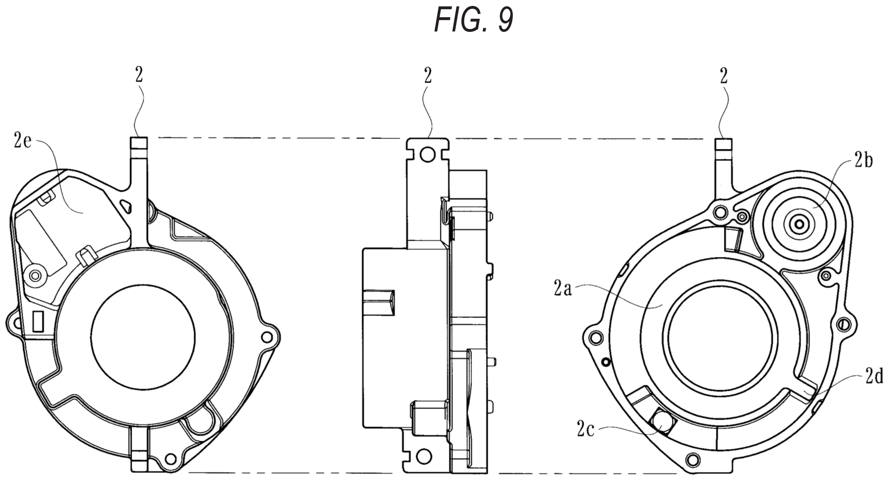

The case 2 is disposed in the switch case S (see FIGS. 3 to 5) attached to a tip end side of the handlebar H (a base end side of the throttle grip G) of the two-wheel vehicle (vehicle), accommodates main components constituting the throttle grip device, and rotatably holds the interlocking member 1, the rotation member 3, and the like. As shown in FIG. 9, such a case 2 is a molded component including a first accommodation portion 2a that rotatably accommodates the interlocking member 1, a second accommodation portion 2b that rotatably accommodates the rotation member 3, a third accommodation portion 2c that accommodates the resistance force applying unit 4, a locking portion 2d that is capable of locking one end portion of the first biasing unit S 1, and an accommodation recess portion 2e that accommodates the magnetic sensor 6 and a printed circuit board 5. Reference numeral 8 indicates a plate-like lid member for closing an opening side of the case 2.

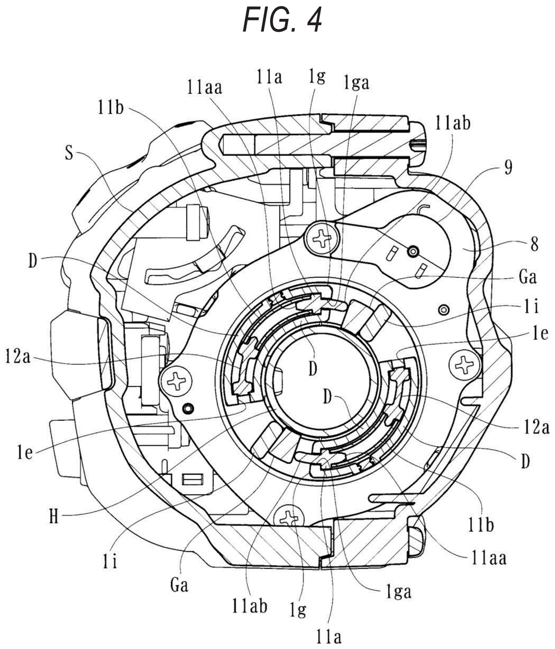

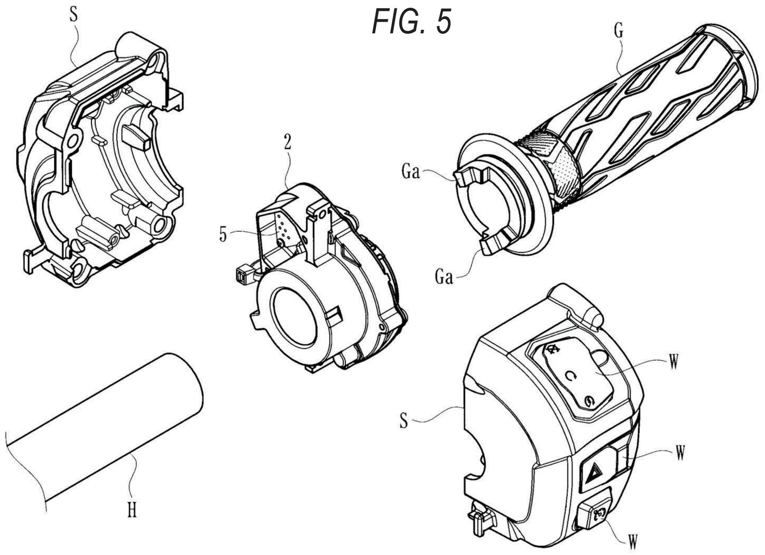

The throttle grip G extends from the switch case S and can be operated with a rotation by a driver while being held, and as shown in FIGS. 1 to 3, the throttle grip G can be operated with "forward rotation a" in a predetermined direction and with "reverse rotation b" in a direction opposite to the predetermined direction about an axis from an initial position. Engaging portions Ga (see FIG. 5) each having a protruding shape are formed on the base end side of the throttle grip G, and the throttle grip G and the interlocking member 1 are connected by engaging the engaging portions Ga with engaged portions 1a (see FIGS. 4, 10, and 11, and the like) of the interlocking member 1.

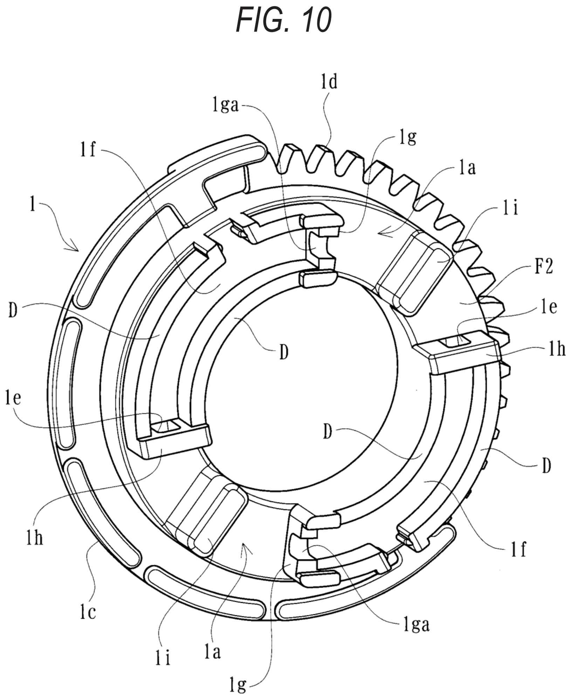

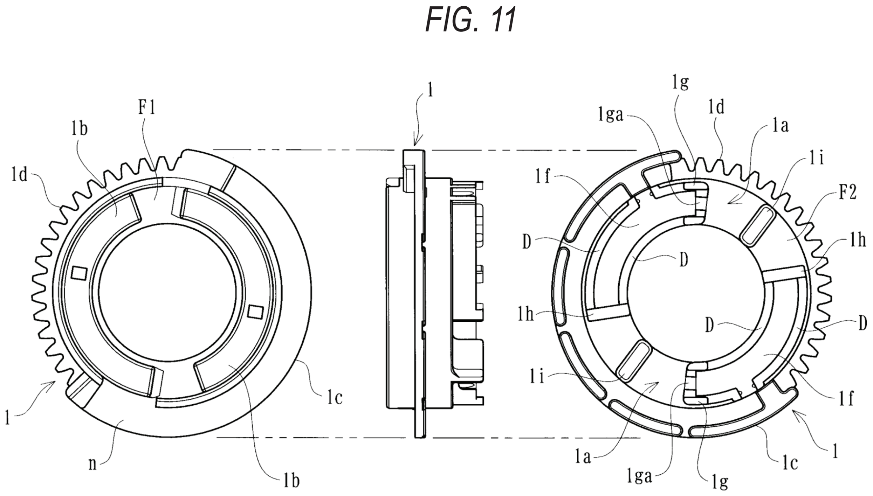

The interlocking member 1 has the engaged portions 1a that can be engaged with the engaging portions Ga formed at the throttle grip G, and can rotate in conjunction with the rotation operations, including the forward rotation a and the reverse rotation b, of the throttle grip G. Specifically, as shown in FIGS. 10 and 11, the interlocking member 1 according to the present embodiment is an annular member having one surface F1 and the other surface F2, and is rotatable about a rotation axis k in accordance with the rotation operation of the throttle grip G. The interlocking member 1 includes the engaged portions 1a, a pair of attachment recess portions 1b, a flange 1c, a gear 1d, and a pair of accommodation recess portions 1f. A sliding surface n on which the resistance force applying unit 4 slides is formed on the flange 1c of the interlocking member 1 according to the present embodiment.

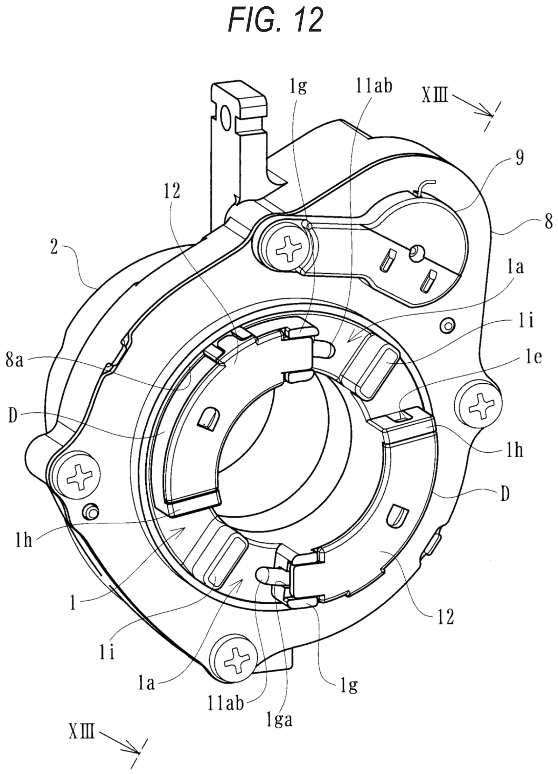

The engaged portions 1a are formed on the other surface F2 of the interlocking member 1 and are respectively formed at positions corresponding to the engaging portions Ga of the throttle grip G, and in the present embodiment, each of the engaged portions 1a has one end wall portion 1g formed at one end portion of the accommodation recess portion 1f and a convex portion 1i protruding from the interlocking member 1. As shown in FIG. 12, the engaged portion 1a faces the outside through an opening 8a of the lid member 8, and when the throttle grip G is assembled, the engaging portion Ga is positioned between the one end wall portion 1g and the convex portion 1i of the engaged portion 1a as shown in FIG. 4.

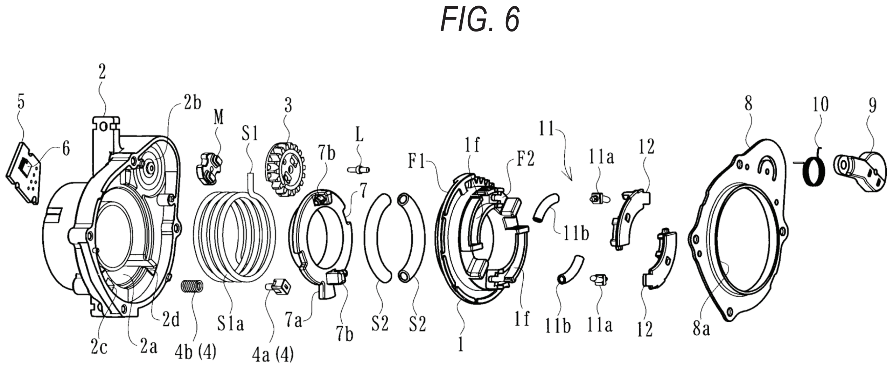

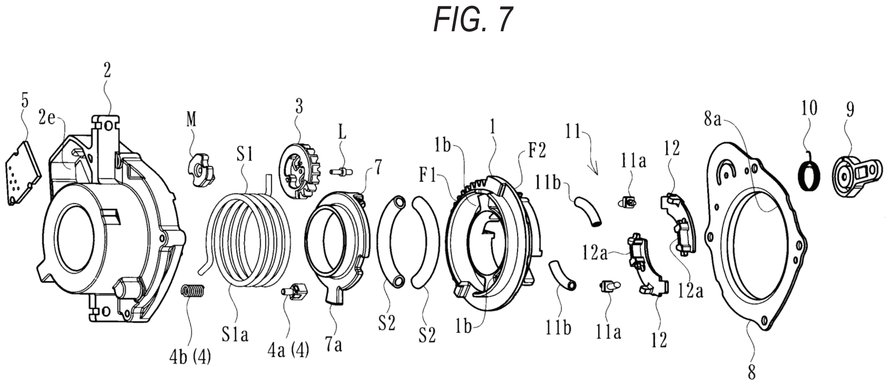

The attachment recess portions 1b are implemented by a pair of grooves formed in an arc shape on the one surface F1 of the interlocking member 1, and are configured such that the second biasing units S2 (see FIGS. 6 to 8) implemented by coil springs are respectively attached in the attachment recess portions 1b. As shown in FIGS. 6 and 7, a selection member 7 having a locking portion 7a and receiving portions 7b is attached to the one surface F1 of the interlocking member 1.

The receiving portions 7b are formed at positions corresponding to the attachment recess portions 1b, and when the selection member 7 is attached, the receiving portions 7b are inserted into the attachment recess portions 1b, and each of the receiving portions 7b receives one end of the second biasing unit S2. In addition, the locking portion 7a is configured to be locked to a part of the interlocking member 1 to cause the selection member 7 to perform the forward rotation a together with the interlocking member 1 when the interlocking member 1 performs the forward rotation a, and is configured not to be locked to the part of the interlocking member 1 and not to be interlocked with the rotation of the interlocking member 1 when the interlocking member 1 performs the reverse rotation b.

Accordingly, when the throttle grip G is operated with the reverse rotation b and the interlocking member 1 performs the reverse rotation b, the interlocking member 1 is rotated relative to the selection member 7, and thus the receiving portion 7b compresses the second biasing unit S2 and biases the interlocking member 1 toward the initial position. On the other hand, when the throttle grip G is operated with the forward rotation a and the interlocking member 1 performs the forward rotation a, a biasing force is generated by the first biasing unit S1, but since the selection member 7 is rotated together with the interlocking member 1, the second biasing unit S2 is not compressed by the receiving portion 7b and the biasing force is not generated.

On the interlocking member 1, the flange 1c is formed over a circumferential direction, and the gear 1d is formed over a predetermined range. The gear 1d is assembled in a state of being engaged with a gear formed on an outer periphery of the rotation member 3, and is configured such that the rotation member 3 rotates along with the rotation of the interlocking member 1.

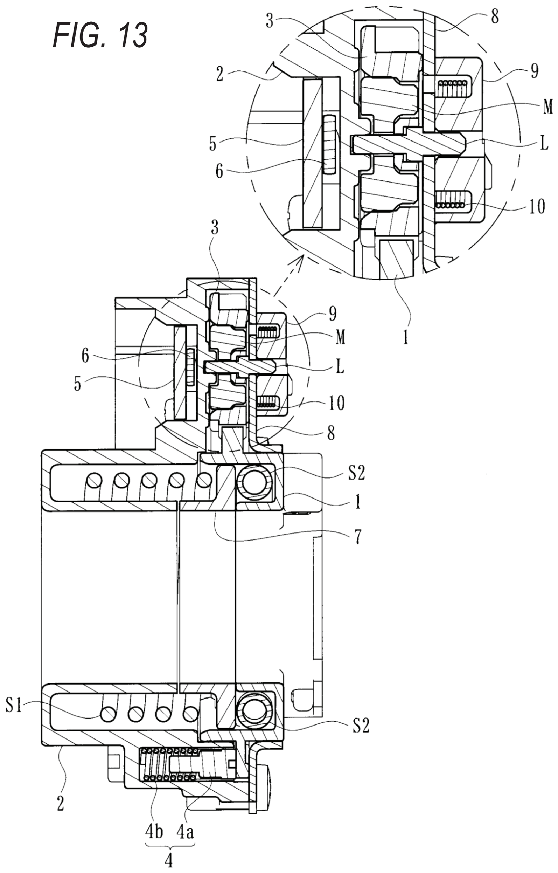

The rotation member 3 is rotatable in conjunction with the interlocking member 1, is accommodated in the second accommodation portion 2b (see FIG. 9) of the case 2, and is rotatable about a shaft member L (see FIG. 13). When the interlocking member 1 rotates, the rotation member 3 rotates about the shaft member L at a rotation angle corresponding to a rotation angle of the interlocking member 1. As shown in FIG. 13, a magnet M is attached to the rotation member 3, and the magnet M rotates about the shaft member L together with the rotation member 3.

As shown in FIG. 13, one end of the shaft member L is supported by an attachment member 9, and a torsion spring 10 is attached to the attachment member 9. Such a torsion spring 10 biases the rotation member 3 in a rotation direction via the shaft member L, and a backlash between the gear 1d of the interlocking member 1 and the rotation member 3 is prevented by the biasing force.

As shown in FIG. 13, the magnetic sensor 6 (rotation angle detection unit) is a sensor disposed at a position on an extension line of the shaft member L. The magnetic sensor 6 enables to detect a rotation angle of the throttle grip G by detecting a change in magnetism (change in a direction of a magnetic field) generated from the magnet M. Specifically, the magnetic sensor 6 can obtain an output voltage corresponding to a change in magnetic field (change in magnetic flux density) of the magnet M, and is implemented by, for example, a Hall element (specifically, a linear Hall IC capable of obtaining an output voltage proportional to the magnetic field (magnetic flux density) of the magnet M) which is a magnetic sensor using the Hall effect.

The magnetic sensor 6 according to the present embodiment is provided on the printed circuit board 5 on which a predetermined electric circuit is printed. The printed circuit board 5 on which the magnetic sensor 6 is mounted is accommodated in the accommodation recess portion 2e of the case 2 and then molded with a predetermined resin material, so that the printed circuit board 5 is waterproof and dustproof.

In the throttle grip device according to the present embodiment, when the throttle grip G is operated with the forward rotation a and the interlocking member 1 rotates in the same direction (forward direction), the rotation member 3 also rotates in an interlocking manner, and the magnet M connected to the rotation member 3 rotates by the same angle in the forward direction. Accordingly, the magnetic field of the magnet M changes according to the rotation angle of the rotation member 3, and thus the magnetic sensor 6 can obtain an output voltage corresponding to this rotation angle, and can detect the rotation angle of the interlocking member 1 (that is, the rotation angle of the throttle grip G) based on this output voltage.

The rotation angle of the throttle grip G detected in this way is transmitted as an electric signal to an engine control unit (ECU) mounted on the two-wheel vehicle, and the drive source (engine, motor, or the like) of the vehicle can be controlled according to the transmitted rotation angle of the throttle grip G.

On the other hand, when the throttle grip G is operated with the reverse rotation b and the interlocking member 1 rotates in the same direction (reverse direction), the rotation member 3 and the magnet M also rotate in an interlocking manner, and thus the magnetic sensor 6 can detect the reverse rotation b of the interlocking member 1, and can activate or deactivate a predetermined function (for example, an auto-cruise function) of the vehicle.

As shown in FIGS. 6 to 8, the first biasing unit S1 is a torsion coil spring having a coil portion S1a, and functions as a return spring for biasing the interlocking member 1 toward the initial position when the throttle grip G is operated with the forward rotation a. Specifically, one end of the first biasing unit S1 is locked to the locking portion 2d of the case 2, and the other end thereof is locked to the interlocking member 1. When the throttle grip G is operated with a rotation in the forward direction (forward rotation a), the interlocking member 1 rotates against the biasing force of the first biasing unit S 1, and thus the biasing force is transmitted to the throttle grip G, and a force for returning the throttle grip G to the initial position acts.

The resistance force applying unit 4 can generate a rotation load by generating sliding resistance (frictional resistance due to sliding) during the rotation of the throttle grip G, and includes a friction member 4a implemented by a friction member assembled in a state of abutting against the sliding surface n (see FIG. 11) formed on the interlocking member 1, and a spring member 4b that biases the friction member 4a against the sliding surface n. When the interlocking member 1 performs the forward rotation a or the reverse rotation b along with the rotation operation of the throttle grip G, the friction member 4a slides on the sliding surface n to generate a frictional force, thereby generating a predetermined operation torque (operation load).

Each of the initial position biasing units 11 is attached to the interlocking member 1, and applies a biasing force to the engaging portion Ga until the engaging portion Ga abuts against the engaged portion 1a (specifically, the one end wall portion 1g) (play section T) when the throttle grip G is operated with the forward rotation a from the initial position. Here, the second biasing unit S2 and the initial position biasing units 11 according to the present embodiment are attached to the one surface F1 and the other surface F2 of the interlocking member 1, respectively.

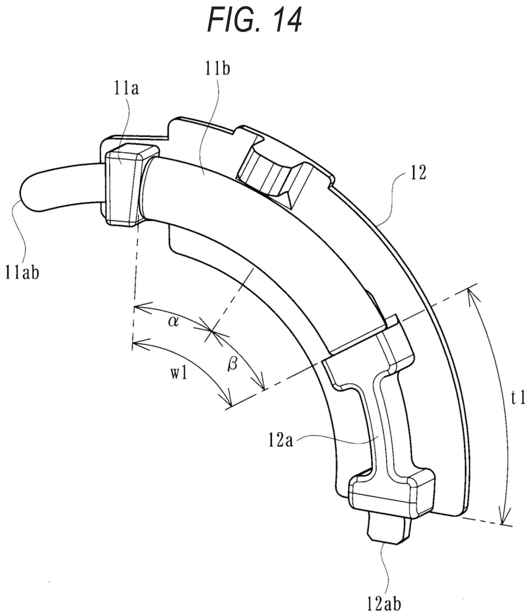

That is, in the throttle grip device according to the present embodiment, the second biasing unit S2 is attached to the one surface F1 of the interlocking member 1, and the initial position biasing units 11 are attached to the other surface F2 (an engaging surface with the engaging portion Ga). As shown in FIGS. 14 to 17, each of such initial position biasing units 11 includes an abutting member 11a, a biasing member 11b that is attached to the abutting member 11a and biases the engaging portion Ga, and a cover member 12, and the abutting member 11a and the biasing member 11b are accommodated in the accommodation recess portion 1f formed on the other surface F2 of the interlocking member 1.

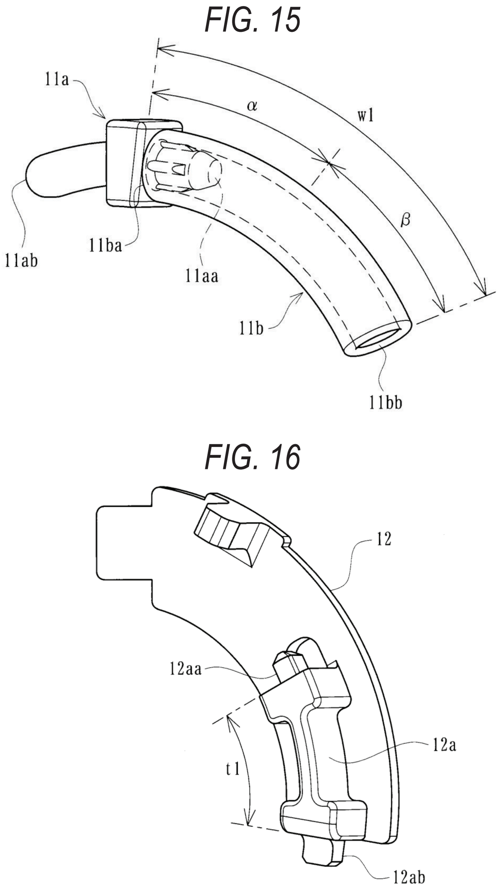

Each of the accommodation recess portions 1f is formed in an arc shape along a virtual circle centered on the rotation axis k of the interlocking member 1 on the other surface F2 of the interlocking member 1, and as shown in FIGS. 10 and 11, includes the one end wall portion 1g formed at one end portion, the other end wall portion 1h formed at the other end portion, and side wall portions D extending in an arc shape over the one end wall portion 1g and the other end wall portion 1h. In addition, as shown in FIG. 12, an insertion portion 1ga through which a tip end portion 11ab of the abutting member 11a is inserted is formed at the one end wall portion 1g, and an insertion hole 1e through which an engaging protrusion 12ab (see FIG. 16) of the cover member 12 is inserted is formed at the other end wall portion 1h.

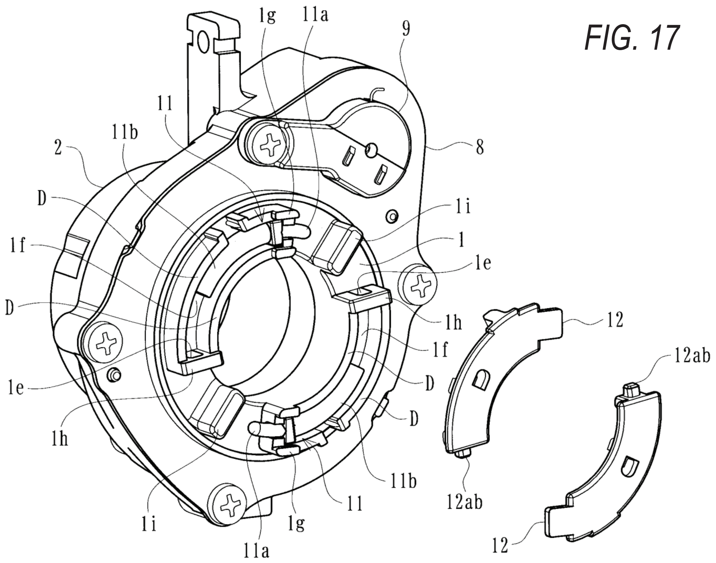

The abutting member 11a abuts against the engaging portion Ga when the throttle grip G is operated with the forward rotation a, and as shown in FIG. 15, includes a receiving portion 11aa that receives one end 11ba of the biasing member 11b, and the tip end portion 11ab that can abut against the engaging portion Ga. As shown in FIGS. 15 and 17, the biasing member 11b is a coil spring accommodated in the accommodation recess portion 1f with one end 11ba abutting against the abutting member 11a, and is attached along the arc-shaped accommodation recess portion 1f.

The cover member 12 covers an opening of the accommodation recess portion 1f to close an accommodation space for the abutting member 11a and the biasing member 11b, and is a plate material having a shape following the arc shape of the accommodation recess portion 1f as shown in FIG. 17. As shown in FIGS. 14 and 16, such a cover member 12 includes a protruding portion 12a which protrudes toward the accommodation recess portion 1f, a receiving portion 12aa which is formed at the protruding portion 12a and receives the other end 11bb of the biasing member 11b, and an engaging protrusion 12ab which can be inserted into the insertion hole 1e (see FIG. 10) of the other end wall portion 1h.

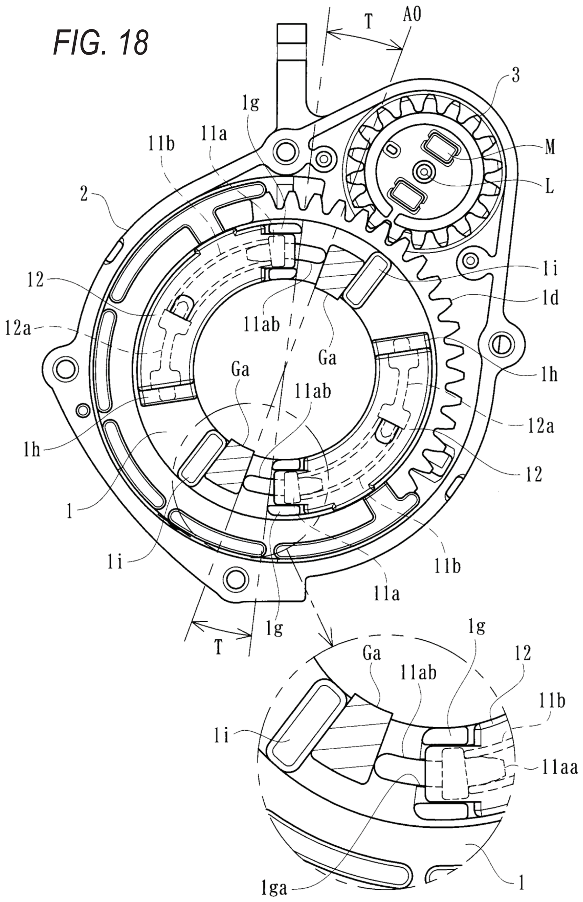

Then, as shown in FIG. 17, after the abutting member 11a and the biasing member 11b are accommodated in the accommodation recess portion 1f, the cover member 12 is attached to cover the opening (upper portion) of the accommodation recess portion 1f. Accordingly, as shown in FIGS. 4 and 18, the one end 11ba of the biasing member 11b abuts against the abutting member 11a, and the other end 11bb abuts against the receiving portion 12aa of the cover member 12.

In addition, the protruding portion 12a including the receiving portion 12aa has an extension dimension t1, and is formed in an arc shape along the shape of the accommodation recess portion 1f. Therefore, after the abutting member 11a and the biasing member 11b are accommodated in the accommodation recess portion 1f, by attaching the cover member 12 to the accommodation recess portion 1f, as shown in FIGS. 4 and 14, an initial attachment dimension w1 (initial compression state) of the biasing member 11b is set according to the extension dimension t1 of the protruding portion 12a.

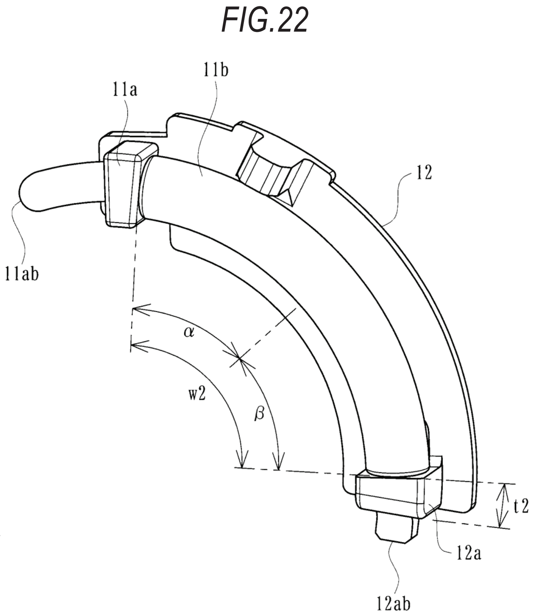

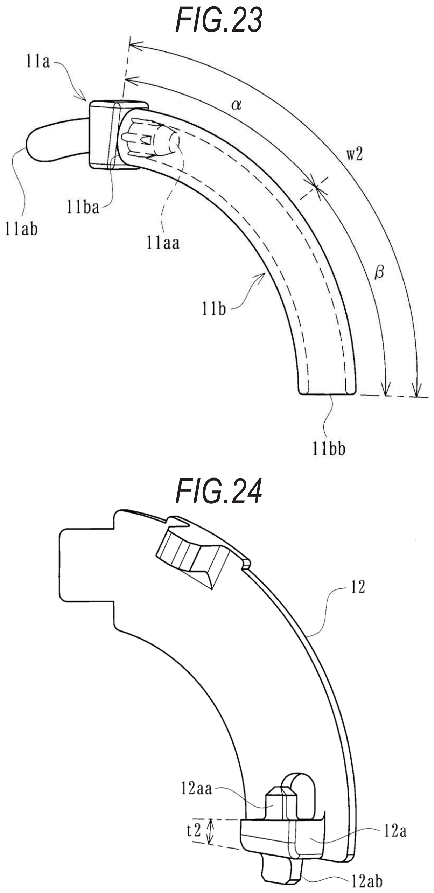

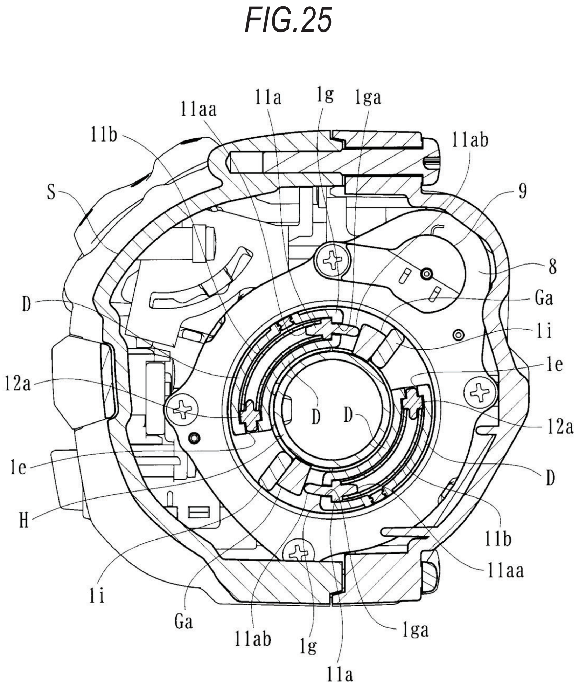

Furthermore, any cover member 12 having the receiving portion 12aa formed at a different position each other is allowed to be attached to the accommodation recess portion 1f according to the throttle grip device of the present embodiment. For example, instead of the cover member 12 including the protruding portion 12a having the extension dimension t1, as shown in FIGS. 22 and 24, the cover member 12 including the protruding portion 12a having an extension dimension t2 (dimension different from the extension dimension t1) is attachable to the accommodation recess portion 1f. Accordingly, as shown in FIGS. 23 and 25, an initial attachment dimension w2 (initial compression state) of the biasing member 11b is set according to the extension dimension t2 of the protruding portion 12a.

Next, an operation during the rotation operation of the throttle grip G in the throttle grip device according to the present embodiment will be described.

When the throttle grip G is at an initial position A0, as shown in FIG. 18, the engaging portion Ga abuts against the tip end portion 11ab of the abutting member 11a at one surface, and abuts against the convex portion 1i at the other surface. When the throttle grip G is operated with the forward rotation a from the initial position A0, the engaging portion Ga presses the abutting member 11a against the biasing force of the biasing member 11b in the play section T until the engaging portion Ga abuts against the engaged portion 1a (one end wall portion 1g).

Accordingly, when the throttle grip G is operated with the forward rotation a from the initial position A0, the biasing force can be applied to the engaging portion Ga by the initial position biasing unit 11 until the engaging portion Ga abuts against the engaged portion 1a (one end wall portion 1g) to cause the interlocking member 1 to perform the forward rotation a (play section T), and any operation load can be generated. In a process of the forward rotation a of the throttle grip G, in the play section T until the engaging portion Ga abuts against the one end wall portion 1g, the biasing force is applied by the initial position biasing unit 11, but the interlocking member 1 is stopped, and thus the biasing force from the first biasing unit S1 is not applied, and the rotation angle is not detected by the magnetic sensor 6, and thus the engine (drive source) of the vehicle is not controlled.

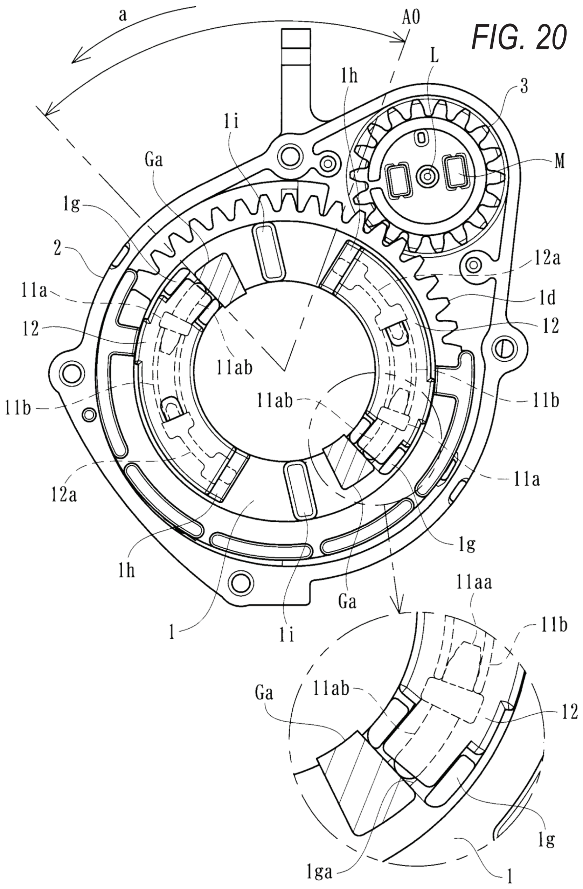

Thereafter, when the throttle grip G is further operated with the forward rotation a, the engaging portion Ga abuts against and presses the one end wall portion 1g as the engaged portion 1a, and thus, as shown in FIG. 20, the interlocking member 1 can perform the forward rotation a in an interlocking manner. In this case, since the biasing force from the first biasing unit S1 is applied to the throttle grip G by the forward rotation a of the interlocking member 1, the operation load can be applied in the process of the forward rotation a of the throttle grip G.

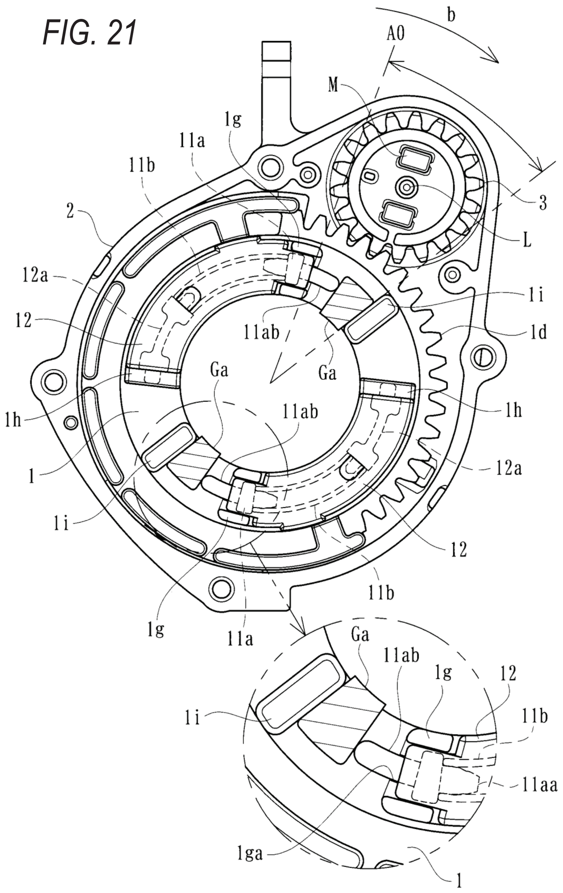

On the other hand, when the throttle grip G is operated with the reverse rotation b from the initial position A0, the engaging portion Ga abuts against and presses the convex portion 1i as the engaged portion 1a, and thus, as shown in FIG. 21, the interlocking member 1 can perform the reverse rotation b in an interlocking manner. In this case, since the biasing force from the second biasing unit S2 is applied to the throttle grip G by the reverse rotation b of the interlocking member 1, the operation load can be applied in the process of the reverse rotation b of the throttle grip G.

Here, the biasing member 11b of the initial position biasing unit 11 according to the throttle grip device of the present embodiment may be a multiple-stage pitch spring that has a plurality of regions having different pitches and in which a spring characteristic changes in a plurality of stages in the compression process. For example, as shown in FIGS. 14 and 22, the biasing member 11b of the initial position biasing unit 11 may be a two-stage pitch spring having a region α and a region β having different pitches. When such a two-stage pitch spring is used, the spring characteristic can be changed in two stages in the compression process, and any spring characteristic can be generated in a process in which the throttle grip G rotates in the play section T.

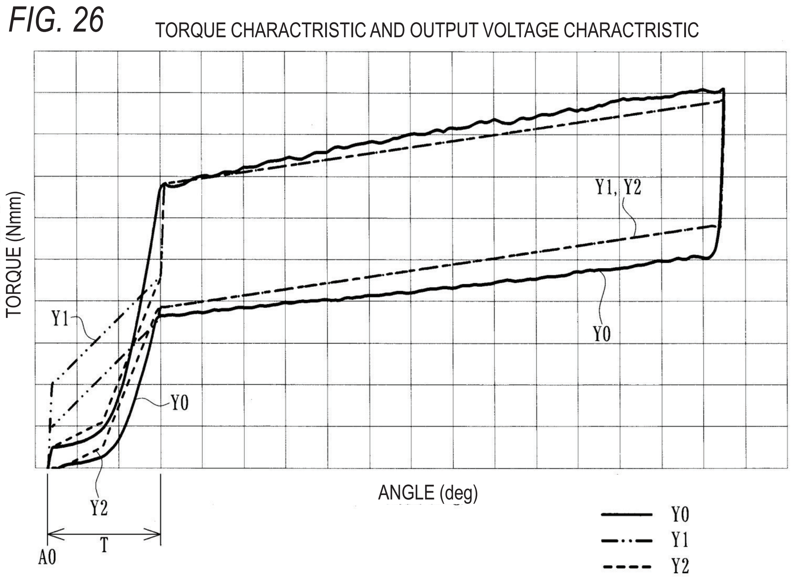

Next, experimental results showing a technical advantage of the throttle grip device according to the present embodiment will be described with reference to a graph of FIG. 26. In the graph of FIG. 26, a horizontal axis represents an operation angle (deg) detected by the magnetic sensor 6, and a vertical axis represents the generated operation torque (operation load).

First, a general-purpose wire type throttle grip device YO (which controls a throttle through a wire), a throttle grip device Y1 including the biasing member 11b (single pitch spring) without regions having different pitches of the initial position biasing unit 11, and a throttle grip device Y2 including the biasing member 11b (two-stage pitch spring), which has regions α and β having different pitches, of the initial position biasing unit 11 are prepared.

When throttle grips G of each of the throttle grip devices (Y0, Y1, Y2) are operated with a rotation, a relationship between the operation angle and the operation load is as shown in the graph of FIG. 26. According to such a graph, it can be seen that the operation loads of the throttle grip devices Y1 and Y2 are approximated in the play section T (section corresponding to a tensile load of the wire) of the general-purpose wire type throttle grip device Y0.

Therefore, the operation loads of the throttle grip devices Y1 and Y2 according to the embodiment of the present invention can be approximated to the operation load of the throttle grip device YO, and in particular, the throttle grip device Y2 can change the spring characteristic when the throttle grip G is operated with a rotation only during the play section T from the initial position A0, and thus the operation loads of the throttle grip devices Y1 and Y2 can be further approximated to the operation load of the throttle grip device Y0.

According to the throttle grip device of the present embodiment, since the initial position biasing unit 11 is provided, and the second biasing unit S2 and the initial position biasing unit 11 are respectively attached to the one surface F1 and the other surface F2 of the interlocking member 1, it is possible to generate the operation load at the start of the rotation operation (forward rotation a) of the throttle grip G and before the rotation of the interlocking member 1, and it is possible to operate the throttle grip G with rotations in the forward direction and the reverse direction while generating the biasing force.

In addition, since the initial position biasing unit 11 according to the present embodiment includes the abutting member 11a that abuts against the engaging portion Ga and the biasing member 11b that is attached to the abutting member 11a and biases the engaging portion Ga, and the accommodation recess portion 1f that accommodates the abutting member 11a and the biasing member 11b is formed at the interlocking member 1, it is possible to reliably attach the initial position biasing unit 11 to the other surface F2 of the interlocking member 1.

Furthermore, since the engaged portion 1a according to the present embodiment includes the one end wall portion 1g formed at the one end portion of the accommodation recess portion 1f and the convex portion 1i protruding from the interlocking member 1, and the insertion portion 1ga through which the abutting member 11a is inserted to cause a tip end portion of the abutting member 11a to abut against the engaging portion is formed at the one end wall portion 1g, it is possible to generate the biasing force of the biasing member 11b via the abutting member 11a until the throttle grip G is operated with the forward rotation a from the initial position A0 to cause the interlocking member 1 to perform the forward rotation a (play section T).

By further operating the throttle grip G with the forward rotation a from the play section T, the engaging portion Ga can press the one end wall portion 1g to cause the interlocking member 1 to perform the forward rotation a, and by operating the throttle grip G with the reverse rotation b from the initial position A0, the engaging portion Ga can press the convex portion 1i to cause the interlocking member 1 to perform the reverse rotation b.

Further, since the biasing member 11b according to the present embodiment is a coil spring accommodated in the accommodation recess portion 1f with one end abutting against the one end wall portion 1g, and the accommodation recess portion 1f is formed in an arc shape along the virtual circle centered on the rotation axis k of the interlocking member 1, it is possible to satisfactorily transmit the biasing force of the biasing member 11b to the engaging portion Ga until the throttle grip G is operated with the forward rotation a to cause the interlocking member 1 to perform the forward rotation a (play section T).

In addition, since the initial position biasing unit 11 according to the present embodiment includes the cover member 12 that covers the opening of the accommodation recess portion 1f and closes the accommodation space of the abutting member 11a and the biasing member 11b, and the receiving portion 12aa that receives the other end 11bb of the biasing member 11b is formed in the cover member 12, the cover member 12 can have both a function of closing the accommodation space of the accommodation recess portion 1f and a function of receiving the other end 11bb of the biasing member 11b.

In addition, since any cover member 12 having the receiving portion 12aa formed at a different position each other is allowed to be attached to the accommodation recess portion 1f according to the present embodiment, the biasing member 11b having a different length dimension (attachment dimension) can be optionally attached to the accommodation recess portion 1f. In particular, as in the present embodiment, when the biasing member of the initial position biasing unit is a multiple-stage pitch spring (two-stage pitch spring in the present embodiment) which has a plurality of regions having different pitches and in which the spring characteristic changes in a plurality of stages in a compression process, it is possible to easily make an operational feeling similar to an operational feeling of a general-purpose wire type throttle grip G whose operability is familiar.

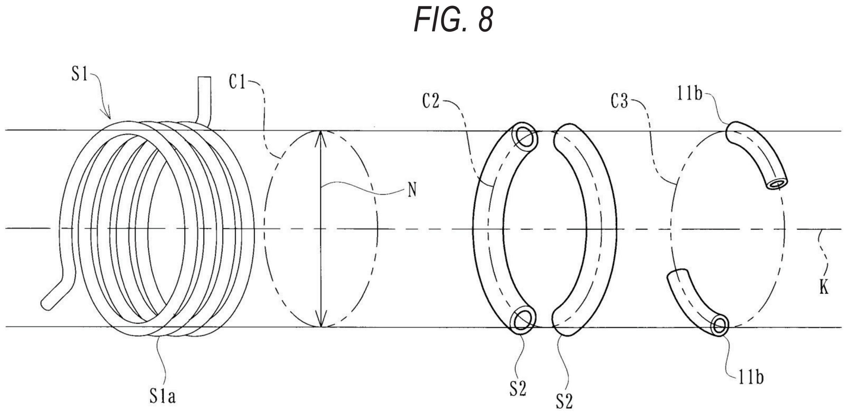

However, in the present embodiment, as shown in FIG. 8, when a virtual circle along the coil portion S1a of the torsion coil spring of the first biasing unit S1 is defined as a first virtual circle C1 (a virtual circle having a diameter N centered on the rotation axis k), and virtual circles obtained by offsetting the first virtual circle C1 in a direction of the rotation axis k of the interlocking member 1 are defined as a second virtual circle C2 and a third virtual circle C3, respectively, the second biasing unit S2 and the biasing member 11b of the initial position biasing unit 11 are disposed in an arc shape along the second virtual circle C2 and the third virtual circle C3, respectively. Accordingly, it is possible to stably generate the biasing forces of the first biasing unit S1, the second biasing unit S2, and the biasing member 11b of the initial position biasing unit 11.

Although the present embodiment has been described above, the present invention is not limited thereto, and for example, the biasing member 11b of the initial position biasing unit 11 may be another biasing unit (for example, an elastic member such as a resin material or a rubber material) instead of the coil spring, or may be another sensor (such as a sensor that does not use magnetism) capable of detecting the rotation angle of the throttle grip G instead of the magnetic sensor 6. Note that a vehicle to which the present invention is applied is not limited to a two-wheel vehicle as in the present embodiment, and the present invention may be applied to another vehicle (for example, an ATV and a snowmobile) having the handlebar H.

As long as a throttle grip device is in accordance with the spirit of the present invention, the present invention can be applied to devices having a different external shape or having other functions added.

## Claims

1. A throttle grip device comprising:
a throttle grip configured to be operated with a rotation by a driver, and allowed to be operated with a forward rotation in a predetermined direction and a reverse rotation in a direction opposite to the predetermined direction from an initial position;
an interlocking member including an engaged portion configured to be engaged with an engaging portion formed on the throttle grip, and configured to rotate in conjunction with the forward rotation and the reverse rotation of the throttle grip;
a case configured to rotatably hold the interlocking member;
a first biasing unit configured to bias the interlocking member toward the initial position when the throttle grip is operated with the forward rotation;
a second biasing unit configured to bias the interlocking member toward the initial position when the throttle grip is operated with the reverse rotation; and
a rotation angle detection unit configured to detect a rotation angle of the throttle grip by detecting a rotation angle of the interlocking member, wherein
a drive source of a vehicle is allowed to be controlled in accordance with the rotation angle, detected by the rotation angle detection unit, of the throttle grip during the forward rotation,
a predetermined function of the vehicle is allowed to be activated or deactivated when the throttle grip is operated with the reverse rotation,
the throttle grip device further comprises an initial position biasing unit configured to apply a biasing force to the engaging portion until the engaging portion abuts against the engaged portion to cause the interlocking member to perform a forward rotation when the throttle grip is operated with the forward rotation from the initial position, and
the second biasing unit and the initial position biasing unit are attached to one surface and an other surface of the interlocking member, respectively.

2. The throttle grip device according to claim 1, wherein
the initial position biasing unit includes:
an abutting member that abuts against the engaging portion; and
a biasing member that is attached to the abutting member and biases the engaging portion, and
the interlocking member has an accommodation recess portion that accommodates the abutting member and the biasing member.

3. The throttle grip device according to claim 2, wherein
the engaged portion has:
a one end wall portion formed at one end portion of the accommodation recess portion; and
a convex portion protruding from the interlocking member,
the engaging portion abuts against the one end wall portion to rotate the interlocking member during the forward rotation of the throttle grip,
the engaging portion abuts against the convex portion to rotate the interlocking member during the reverse rotation of the throttle grip, and
the one end wall portion has an insertion portion through which the abutting member is inserted to cause a tip end portion of the abutting member to abut against the engaging portion.

4. The throttle grip device according to claim 3, wherein
the biasing member is a coil spring that has one end abutting against the abutting member and is accommodated in the accommodation recess portion, and
the accommodation recess portion is formed in an arc shape along a virtual circle centered on a rotation axis of the interlocking member.

5. The throttle grip device according to claim 4, wherein
the initial position biasing unit includes a cover member that covers an opening of the accommodation recess portion to close an accommodation space for the abutting member and the biasing member, and
the cover member has a receiving portion that receives an other end of the biasing member.

6. The throttle grip device according to claim 5, wherein
any cover member having the receiving portion formed at a different position each other is allowed to be attached to the accommodation recess portion.

7. The throttle grip device according to claim 2, wherein
the biasing member of the initial position biasing unit is a multiple-stage pitch spring which has a plurality of regions having different pitches and in which a spring characteristic changes in a plurality of stages in a compression process.

8. The throttle grip device according to claim 2, wherein
the first biasing unit is a torsion coil spring,
the second biasing unit and the biasing member of the initial position biasing unit are coil springs, and
in a case where a virtual circle along a coil portion of the torsion coil spring of the first biasing unit is defined as a first virtual circle, and virtual circles obtained by offsetting the first virtual circle in a direction of a rotation axis of the interlocking member are defined as a second virtual circle and a third virtual circle, the second biasing unit and the biasing member of the initial position biasing unit are disposed in an arc shape along the second virtual circle and the third virtual circle, respectively.
